# EUROPEAN PATENT APPLICATION

(11) **EP 4 358 421 A1**
(43) Date of publication of application: **24.04.2024**
(21) Application number: 22202148.7
(22) Date of filing: 18.10.2022
(51) Int. Cl.: H04B 5/00, H04B 7/10, H04B 7/14

(54) **A SYSTEM FOR READING A PASSIVE RADIO FREQUENCY DEVICE AND A PASSIVE RADIO FREQUENCY DEVICE**

(71) Applicant: Nokia Technologies Oy, 02610 Espoo (FI)
(72) Inventor: SVENDSEN, Simon, Aalborg (DK); VEJLGAARD, Benny, Gistrup (DK); HARREBEK, Johannes, Aalborg (DK); BARBU, Oana-Elena, Aalborg (DK)
(74) Representative: Nokia EPO representatives

(57) **Abstract**

A reader, for reading a passive radio frequency device, configured to electronically adjust a reception polarization to receive a radio frequency signal having a second polarization, different to a first polarization, more efficiently than a radio frequency signal having a first polarization transmitted by an activator. An activator, for activating a passive radio frequency device, configured to electronically adjust a transmission polarization to transmit a radio frequency signal having a first polarization, different to a reception polarization of a reader. A system comprising the reader and the activator.

## Description

### TECHNOLOGICAL FIELD

Examples of the disclosure relate to a system for reading a passive radio frequency device and a passive radio frequency device. Some relate to implementation in cellular telecommunication networks.

### BACKGROUND

A system for reading a passive radio frequency device typically comprises an apparatus that activates a passive radio frequency device by transfer of electromagnetic energy and also reads a response from the passive radio frequency device.

One example of a passive radio frequency device is an ambient power-enabled Internet of Things (Ambient power-enabled loT) device. This type of device is either battery-less or with limited energy storage capability (i.e., using a capacitor) and the energy is provided through the harvesting of radio waves, light, motion, heat, or any other power source that could be seen suitable.

### BRIEF SUMMARY

According to various, but not necessarily all, examples there is provided a passive radio frequency device (PRFD) reader configured to electronically adjust a reception polarization to receive a radio frequency signal having a second polarization, different to a first polarization, more efficiently than a radio frequency signal having a first polarization transmitted by an activator.

In some but not necessarily all examples, the PRFD reader is configured to:
accept radio frequency signals having a polarization aligned with the reception polarization, and reject radio frequency signals having a polarization orthogonal to the reception polarization, and comprising a controller configured to control the reception polarization to be substantially orthogonal to the first polarization.

In some but not necessarily all examples, the PRFD reader comprises means for performing one of more of the following processes:
configure reception polarization by controlling gain of orthogonal components of a received signal;
configure reception polarization by controlling gain and phase of orthogonal components of a received signal;
configure reception polarization by controlling eccentricity of elliptical reception polarization;
configure reception polarization by controlling handedness of reception polarization.

In some but not necessarily all examples, the PRFD reader is configured to selectively combine multiple linear polarization paths.

In some but not necessarily all examples, the PRFD reader is configured to provide one or more of:
selective amplification of multiple linear polarization paths followed by combination of the multiple linear polarization paths;
selective amplification and selective phase adjustment of multiple linear polarization paths followed by combination of the multiple linear polarization paths;
selective amplification and selective polarity adjustment of multiple linear polarization paths followed by combination of the multiple linear polarization paths.

In some but not necessarily all examples, selective polarity adjustment is controlled using a switch or switchable baluns.

In some but not necessarily all examples, the PRFD reader is configured to select one or more of a plurality of antenna feeds to selectively combine multiple linear polarization paths.

In some but not necessarily all examples, the PRFD reader comprises:
a first linear polarization path;
a second linear polarization path;
separate variable amplification in the first linear polarization path and the second linear polarization path.

In some but not necessarily all examples, the PRFD reader is configured to dynamically control the variable amplification in the first linear polarization path and the second linear polarization path and/or configured to dynamically control the variable amplification in the first linear polarization path and the second linear polarization path based on measurements at the reader.

In some but not necessarily all examples, the PRFD reader is configured to provide separate variable amplification in the first linear polarization path and the second linear polarization path to increase rejection of a transmitted radio frequency signal having the first polarization and increase acceptance of a transmitted radio frequency signal having the second polarization.

In some but not necessarily all examples, the PRFD reader is configured to:
send a request to a passive radio frequency device activator for reception polarization calibration;
receive a calibration signal transmitted from the passive radio frequency device activator with a first polarization;
adjust the reception polarization to receive a radio frequency signal having a second polarization more efficiently than a radio frequency signal having the first polarization transmitted by the activator.

According to various, but not necessarily all, examples there is provided a system comprising:
a PRFD reader;
an PRFD activator configured to transmit a radio frequency signal having a first polarization;
at least a passive radio frequency device,
wherein the PRFD reader is configured to adjust the reception polarization of the PFRD reader to reject radio frequency signals from the PRFD activator and accept radio frequency signals from the passive radio frequency device.

In some but not necessarily all examples, the PRFD activator is comprised in a first node of a cellular telecommunications network, and the PFRD reader is comprised in a second node of the cellular telecommunications network that is distinct from the first node of the cellular telecommunications network.

According to various, but not necessarily all, examples there is provided a passive radio frequency device (PRFD) activator configured to electronically adjust a transmission polarization to transmit a radio frequency signal having a first polarization, different to a reception polarization of a passive radio frequency device reader.

In some but not necessarily all examples, the PRFD activator is configured to electronically adjust a transmission polarization to transmit a radio frequency signal having a first polarization P1, orthogonal to a reception polarization of a passive radio frequency device reader, and optionally configured to electronically adjust the transmission polarization in dependence upon information received from the passive radio frequency device reader.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein.
FIG. 10 shows another example of the subject matter described herein;
FIG. 11 shows another example of the subject matter described herein.
FIG. 12 shows another example of the subject matter described herein;
FIG. 13 shows another example of the subject matter described herein.
FIG. 14 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### TERMINOLOGY

The terms 'CoPol' and 'CrossPol' are used to refer to two mutually orthogonal linear polarizations. The terms first linear polarization and second linear polarization can be used instead with the understanding that the first linear polarization and the second linear polarization are orthogonal. The use of the terms 'CoPol' and 'CrossPol' therefor implies linear polarization and orthogonality. However, it does not necessarily imply any defined reference polarization direction (for example, an antenna under test polarization) that is aligned with CoPol and orthogonal to CrossPol.

The terms CoPol and CrossPol are, for example, used to refer to two orthogonal feeds of an antenna, as the feeds are always orthogonal, independent of the orientation of the device.

The activator 10 for a passive radio frequency device 30 will in some circumstances be referred to as a passive radio frequency device activator 10 or activator 10. The reader 20 for the (activated) passive radio frequency device 30 will in some circumstances be referred to as a passive radio frequency device reader 20 or reader 20. The activator 10 is also known as an illuminator. It is the passive radio frequency device 30 that is passive, not the activator 10 or the reader 20.

### DETAILED DESCRIPTION

The following examples relates to an activator 10 for a passive radio frequency device 30 and a reader 20 for the (activated) passive radio frequency device 30. One or other, or both of the activator 10 and the reader 20 is configured to electronically adjust its transmission polarization/reception polarization.

In some examples, a passive radio frequency device reader 20 is configured to electronically adjust 72 a reception polarization to receive a radio frequency signal 32 having a second polarization P2, different to a first polarization P1, more efficiently than a radio frequency signal 12 having the first polarization P1 transmitted by an activator 10.

The passive radio frequency device reader 20 is configured to electronically adjust 72 the reception polarization to receive the radio frequency signal 32 having the second polarization P2 from the (activated) passive radio frequency device 30.

In some examples, a passive radio frequency device activator 10 is configured to electronically adjust 71 a transmission polarization to transmit a radio frequency signal 12 having a first polarization P1, different to a reception polarization P2 of a reader 20.

Thus in at least some examples, the activator 10 and/or the reader 20 can adapt its polarization to ensure or improve orthogonality between the first polarization P1 transmitted by the activator 10 and the second polarization P2 preferentially received at the reader 20.

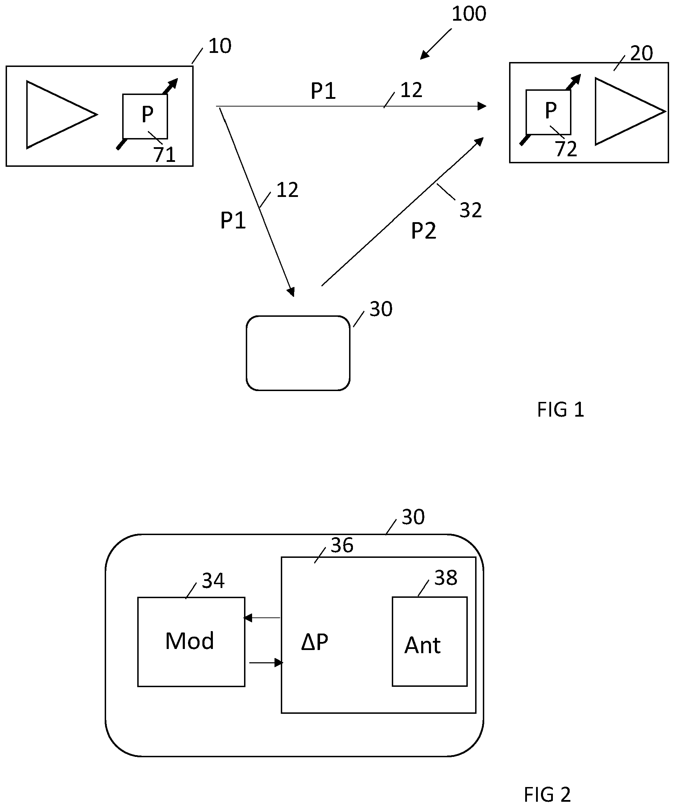

Fig 1 illustrates a system 100 comprising: an activator 10, a reader 20 and one or more passive radio frequency devices 30. The activator 10 activates a passive radio frequency device 30 by transmitting a radio frequency signal 12. The passive radio frequency device 30 responds with a radio frequency signal 32 which is received by the reader 20.

The activator 10 is configured to transmit a radio frequency signal 12 having a first polarization P1. This is used to activate a passive radio frequency device 30.

The passive radio frequency device 30 is configured to backscatter a received radio frequency signal 12 having the first polarization P1, transmitted by the activator 10, as a modulated radio frequency signal 32 having a second polarization P2 different to the first polarization P1.

The reader 20 is configured to receive the radio frequency signal 32 having a second polarization P2 more efficiently than the radio frequency signal 12 having the first polarization P1. The reader 20 therefore receives the radio frequency signal 32 having a second polarization P2 from the passive radio frequency device 30 more efficiently than the radio frequency signal 12 having the first polarization P1 from the activator 10.

In some but not necessarily all examples, the activator 10 is configured to electronically adjust a transmission polarization to transmit a radio frequency signal 12 having the first polarization P1, different to a reception polarization of the reader 20.

In some but not necessarily all examples, the reader 20 is configured to electronically adjust a reception polarization to receive a radio frequency signal 32 having the second polarization P2, different to a first polarization P1, more efficiently than a radio frequency signal 12 having the first polarization P1 transmitted by the activator 10.

It is therefore possible for the activator 10 to comprise a controller 71 configured to electronically adjust a transmission polarization and transmit a radio frequency signal 12 having a polarization that is different to, for example orthogonal to, the reception polarization of the reader 20. It is additionally or alternatively possible for reader 20 to comprise a controller 72 configured to electronically adjust a reception polarization and receive a radio frequency signal 32 having a polarization that is different to, for example orthogonal to, the transmission polarization of the activator 10.

In some but not necessarily all examples, the reader 20 is configured to accept radio frequency signals having a polarization aligned with the reception polarization, and reject radio frequency signals having a polarization orthogonal to the reception polarization, and the controller 72 is configured to control the reception polarization to be substantially orthogonal to the first polarization P1.

The system 100 therefore comprises:
an activator 10;
a reader 20; and
at least a passive radio frequency device 30, where the reader 20 is configured to adjust the reception polarization of the reader 20 to reject radio frequency signals 12 from the activator 10 and accept radio frequency signals 32 from the passive radio frequency device 30.

The activator 10 and the reader 20 are physically separated and in different apparatus. The radio frequency signal 12 is a propagating radio signal as is the radio frequency signal 32.

The reader 20 is configured to reject radio frequency signals 12 having the first polarization P1 and accept radio frequency signals 32 having the second polarization P2. The reader 20 is thus configured to reject radio frequency signals 12 transmitted from the activator 10 and accept radio frequency signals 32 transmitted from the passive radio frequency device 30.

In some examples, the activator 10 and the reader 20 are separated at a distance exceeding 100m or 200m.

In some examples, the activator 10 and the reader 20 are manually configured and aligned for line-of-sight operation. The activator 10 and the reader 20 are configured for line-of-sight operation in FIG 1.

In some examples, the activator 10 and the reader 20 are static or static between readings.

FIG 2 illustrates an example of a passive radio frequency device 30 configured to backscatter a received radio frequency signal 12 having a first polarization P1 as a modulated radio frequency signal 32 having a second polarization P2 different to the first polarization P1.

The passive radio frequency device 30 comprises polarization conversion circuitry 36 configured to convert a signal between the first polarization P1 (as received at antenna 38) and the second polarization P2 (as transmitted by antenna 38).

The passive radio frequency device 30 comprises modulation circuitry 34 configured to modulate a signal received at antenna 38 before retransmission by antenna 38.

The antenna 38 is a dual polarized antenna for receiving the radio frequency signal 12 having the first polarization P1 and transmitting the radio frequency signal 32 having the second polarization P2.

In this example, the passive radio frequency device 30 is configured as a battery-less tag. The energy it requires for operation is harvested, for example from the environment or from the received signal 12.

In some examples, the passive radio frequency device 30 is an ambient power-enabled Internet of Things (Ambient power-enabled loT) device.

In some examples, the first polarization P1 and the second polarization P2 are different polarizations. For example, one could be linear polarized while the other is circularly polarized. In some but not necessarily all examples, the first polarization P1 and the second polarization P2 are orthogonal. For example, one could be linear polarized in a first direction while the other is linear polarized in an orthogonal direction. For example, one could be left-hand circularly polarized while the other is right-hand circularly polarized.

In one example, the first polarization P1 is linear polarized and the second polarization P2 is circularly polarized.

In another example, the first polarization P1 is circularly polarized and the second polarization P2 is linear polarized.

In another example, the first polarization P1 is left-hand circularly polarized and the second polarization P2 is right-hand circularly polarized.

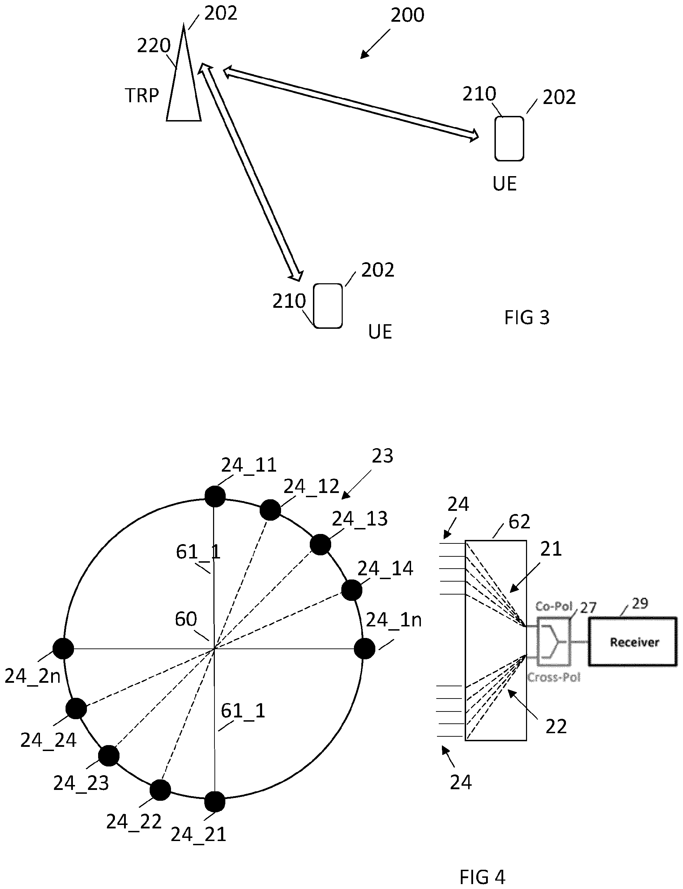

FIG 3 illustrates an example of a radio network 200 comprising a plurality of network nodes 202 including terminal nodes 210, access nodes 220 and one or more core nodes (not illustrated). The terminal nodes 210 and access nodes 220 communicate with each other. The one or more core nodes communicate with the access nodes 220.

The radio network 200 is in this example a cellular telecommunications network, in which at least some of the terminal nodes 210 and access nodes 220 communicate with each other using transmission/reception of radio waves. The one or more core nodes may, in some examples, communicate with each other. The one or more access nodes 220 may, in some examples, communicate with each other.

The cellular telecommunications network comprises a plurality of cells each served by at least one access node 220. In this example, the interface between the terminal nodes 210 and an access node 220 defining a cell is a wireless interface.

The access node 220 is a cellular radio transceiver. The terminal nodes 210 are cellular radio transceivers.

In the example illustrated the cellular network 200 is a third generation Partnership Project (3GPP) network in which the terminal nodes 210 are user equipment (UE) and the access nodes 220 are transmission-reception-points (TRP). A base station can be a TRP or can use multiple TRPs.

The network 200 is a Next Generation (or New Radio, NR) Radio Access network (NG-RAN). The NG-RAN consists of gNodeBs (gNBs) 220 (with one or more TRPs), providing the user plane and control plane (RRC) protocol terminations towards the UE 210. The gNBs 220 are interconnected with each other by means of an X2/Xn interface. The gNBs are also connected by means of the N2 interface to the Access and Mobility management Function (AMF).

A user equipment comprises a mobile equipment. Where reference is made to user equipment that reference includes and encompasses, wherever possible, a reference to mobile equipment.

A system 100, can for example, be implemented in a network 200.

A network node 202 can comprise an activator 10 configured to transmit a radio frequency signal 12 having the first polarization P1.

A second different network node 202 can comprises a reader 20 configured to the receive a radio frequency signal 32 having a second polarization P2 more efficiently than a radio frequency signal 12 having the first polarization P1.

A third network node 202, different to the first and second network nodes 202, can comprise at least a passive radio frequency device 30 configured to backscatter a received radio frequency signal 12 having a first polarization P1, transmitted by the activator 10, as a modulated radio frequency signal 32 having a second polarization P2 different to the first polarization P1.

There can be multiple passive radio frequency devices 30 distributed across a plurality of network nodes 202.

The activator 10 is comprised in a first node 202 of the cellular telecommunications network 200 and the reader 20 is comprised in a second node 202 of the cellular telecommunications network 200 that is distinct from the first node 202 of the cellular telecommunications network 200.

The activator 10 can, for example, be any 3GPP compliant device (gNB, UE, Fixed wireless access (FWA), Network Controlled Repeater (NCR), etc.). The reader 20 can, for example, be any 3GPP compliant device (gNB, UE, Fixed wireless access (FWA), Network Controlled Repeater (NCR), etc.).

In some but not necessarily all examples, the first node 202 is a user equipment (UE) and/or the second node 202 is a user equipment and/or the third node 202 is a user equipment.

In at least some examples, the network 200 can discover the passive radio frequency device 30 only if the passive radio frequency device 30 hears an activation signal 12 loud enough so that: it can charge sufficiently and it can generate an "I am here" response which is loud enough to be heard by another nearby network element (a gNB, PRU, RSU, UE, etc.) operating as reader 20.

The activation signal 12 is a high-power, far-field signal that propagates as a radio wave. The activation signal can have a range greater than 200m. The activation signal 12 uses a frequency within a licensed spectrum. For example, in some examples the activation signal 12 uses a frequency within the range 410 - 7 125 MHz or within the range 24 250 - 52 600 MHz or other New Radio licensed bands.

The power level of the activator 10 can be controlled by the access node 220 (e.g. gNB) allocating the resources needed for the activation signals 12.

The examples described above reduce interference at the reader 20 from direct transmission of the activation signal 12 from the activator 10. This enables low cost and low power readers 20 for reading the passive radio frequency device 30. The dynamic range requirement for the reader 20 is reduced.

The activator 10 can be static or dynamically moving (changing location and/or orientation). The reader 20 can be static or dynamically moving (changing location and/or orientation). The passive radio frequency device 30 may be static or dynamically moving (changing location and/or orientation).

The reader 20 is typically static and electronically aligned with a mobile activator 10 to ensure low interference.

In the examples illustrated in FIGs 4 to 7, the reader 20 is configured to electronically adjust 72 a reception polarization to receive a radio frequency signal 32 having a second polarization P2, different to a first polarization P1, more efficiently than a radio frequency signal 12 having the first polarization P1 transmitted by an activator 10.

In these examples, the reader 20 is configured to selectively combine a first linear polarization path 21 and a second linear polarization path 22.

In the examples illustrated a combiner 27 is used to combine the first linear polarization path 21 and a second linear polarization path 22. The signal on the first linear polarization path 21 and the signal on the second linear polarization path 22 are combined and read at receiver circuitry 29.

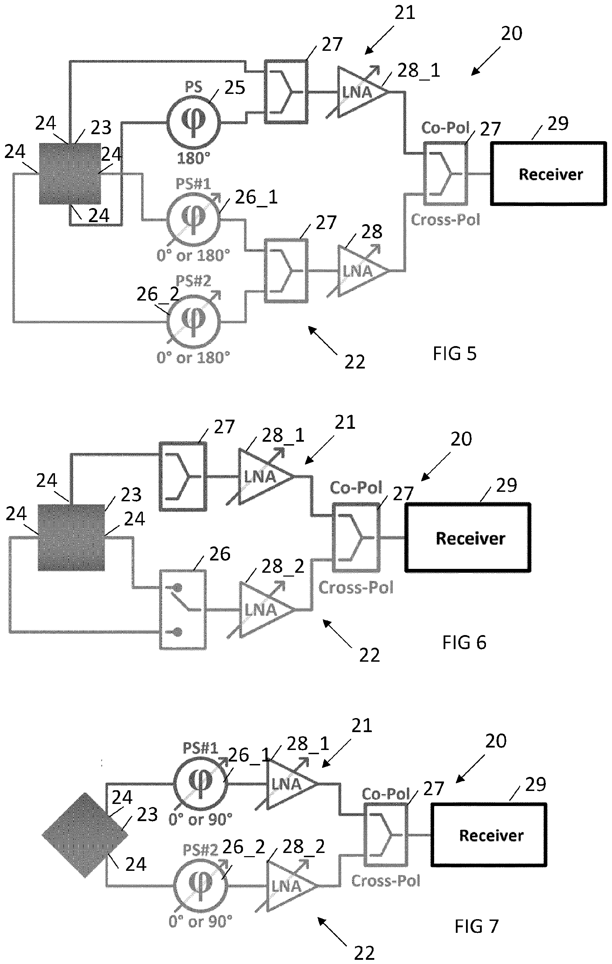

In some examples, the reader 20 electronically selects which antenna feeds 24 couple to which paths 21, 22 (FIG 4, 5, 6). In some examples, the reader 20 electronically selects what amplification is applied to each path 21, 22 (FIGs 5, 6, 7). In some examples, the reader 20 electronically selects what phase difference is introduced by variable phase element(s) 26 (FIGs 5, 6, 7).

FIG 4 illustrates an example of an antenna 23 that is suitable for use in a reader 20. The antenna 23 has a plurality of spatially distributed antenna feeds 24. Each antenna feed 24 is associated with a linear polarization direction.

In the example illustrated, the antenna feeds 24_ij are arranged as a series of pairs 24_1j, 24_2j (where j=1, 2..n). Each pair of antenna feeds 24 are positioned in opposition across a central portion 60 of the antenna 23. The virtual line 61_j joining a pair of antenna feeds 24 defines a polarization direction P_j (not illustrated) associated with the pair of feeds 24 aligned with the virtual line 61_j.

The antenna feeds 24 are in this example distributed around a periphery of the antenna 23. In the example illustrated the antenna feeds 24 are distributed evenly around a periphery of the antenna 23 at a fixed distance from the center 60.

Selector circuitry 62 is used to select which antenna feed 24_ij (or pair of antenna feeds 24_1j, 24_2j) is coupled to the first linear polarization path 21 and which antenna feed 24 (or pair of antenna feeds 24 24_1j, 24_2j) is coupled to the second linear polarization path 22.

The selector circuitry 62 is therefore configured to select one or more of a plurality of antenna feeds 24 to selectively combine a first linear polarization path 21 and a second linear polarization path 22.

The selector circuitry 62 is therefore configured to select one or more of a plurality of antenna feeds 24 to provide the signal on the first linear polarization path 21 and a signal on the second linear polarization path 22 that are combined and read at receiver circuitry 29.

A polarization direction is controlled in the example of FIG 4 by feed selection. Different antenna feeds are selected to select different polarization directions.

FIG 5 illustrates an example of a reader 20 that is configured to electronically adjust 72 a reception polarization to receive a radio frequency signal 32 having a second polarization P2, different to a first polarization P1, more efficiently than a radio frequency signal 12 having the first polarization P1 transmitted by an activator 10.

The reader 20 comprises a dual-polarized antenna 23. The signal from the CoPol feed of the antenna 23 travels along a first path 21 to combiner 27. The signal from the CrossPol feed of the antenna 23 travels along a second path 22 to the combiner 27. The combiner 27 combines the signals from the paths 21, 22 and provides the combined signal to reader circuitry 29.

The reader 20 has a first variable amplifier 28_1 in the first linear polarization path 21 and a different second variable amplifier 28_2 in the second linear polarization path 22.

The first variable amplifier 28_1 in the first linear polarization path 21 controls an accepted CoPol component of reception polarization and the second variable amplifiers 28_2 in the second linear polarization path 22 controls an accepted Cross-Pol component of reception polarization. By changing the relative amplification of the first variable amplifier 28_1 and the second variable amplifier 28_2, the reader 20 controls an orientation of the reception polarization.

The angle θ between the reception polarization and the direction of CoPol polarization can be adjusted by adjusting the relative amplification provided by the amplifiers 28_1, 28_2. If the first amplifier 28_1 provides variable amplification A_1 and the second amplifier 28_2 provides a variable amplification A_2, then tan θ = A_2/A_1.

The reader 20 can thus be configured to have a reception polarization aligned with the CrossPol direction of polarization. The reader 20 rejects a CoPol linear polarized signal and accepts a CrossPol linear polarized signal (orthogonal to the CoPol polarized signal) by switching the first amplifier 28_1 in the first linear polarization path 21 OFF and the second amplifier 28_2 in the second reception path 22 ON. In this example, θ=π/2 and A_1 =0.

The reader 20 can be configured to have a reception polarization aligned with the CoPol linear polarization. The reader 20 can be configured to accept the CoPol linear polarized signal and reject the CrossPol linear polarized signal (orthogonal to the CoPol polarized signal) by switching the first amplifier 28_1 in the first linear polarization path 21 ON and the second amplifier 28_2 in the second reception path 22 OFF. In this example, θ=0 and A_2 =0.

The reader 20 can be configured to have a reception polarization aligned at π/4 radians to the CoPol direction of polarization, between the CoPol direction of polarization and the CrossPol direction of polarization. The reader 20 can be configured to accept CoPol linear polarized signal and accept CrossPol linear polarized signal (orthogonal to the CoPol polarized signal) by switching the amplifier 28_1 in the first linear polarization path 21 ON and the amplifier 28_2 in the second reception path 22 ON. In this example, θ=π/4 and A_1 =A_2.

In the example described above, the range of θ is between 0 and π/2.

The circuit illustrated in FIG 5 is configured to enable a greater range of θ between 0 and +/- π/2.

The CoPol feeds 24 of the antenna 23 are connected via a balun in the first path 21 to the first amplifier 28_1 in the first path 21. The balun comprises a relative π radian phase delay 25 between the CoPol feeds and a combiner 27 for combining the two CoPol feeds 24. In the example illustrated, the delay 25 is only in one of the CoPol feed paths between the antenna 23 and the combiner 27 for the CoPol paths. The other feed path between the antenna 23 and the combiner 27 has no delay. The delay 25 is a fixed delay.

The CrossPol feeds 24 of the antenna 23 are connected via a balun in the second path 22 to the second amplifier 28_2 in the second path 22. The balun comprises a relative π radian phase delay between the CrossPol feeds and a combiner 27 for combining the two feeds 24.

The π radian phase delay between the CrossPol feeds is provided by variable phase elements 26. A first variable phase element 26_1 is coupled between the combiner 27 and a first CrossPol feed 24 and a second variable phase element 26_2 is coupled between the combiner 27 and the other second CrossPol feed 24.

When the phase difference between the first variable phase element 26_1 and the second variable phase element 26_2 is + π radians (e.g. first variable phase element 26_1 is set to phase 0 and the second variable phase element 26_1 is set to phase + π) then the paths 21 and 22 are symmetric and θ is between 0 and π/2.

When the phase difference between the first variable phase element 26_1 and the second variable phase element 26_2 is - π radians (e.g. first variable phase element 26_1 is set to phase +π and the second variable phase element 26_1 is set to phase 0) then θ is between 0 and -π/2.

Thus in one state, the variable phase element 26_1 associated with a first CrossPol feed provides an additional phase delay of 0 and the phase element 26_2 associated with a second CrossPol feed provides an additional phase delay of π radians and in a second state the phase element 26_1 associated with the first CrossPol feed provides an additional phase delay of π radians and the phase element 26_2 associated with the second CrossPol feed provides an additional phase delay of 0.

FIG 6 illustrates an example of a reader 20 that is configured to electronically adjust 72 a reception polarization to receive a radio frequency signal 32 having a second polarization P2, different to a first polarization P1, more efficiently than a radio frequency signal 12 having the first polarization P1 transmitted by an activator 10.

The reader 20 comprises a dual-polarized antenna 23. The signal from the CoPol feed of the antenna 23 travels along a first path 21 to combiner 27. The signal from the CrossPol feed of the antenna 23 travels along a second path 22 to the combiner 27. The combiner 27 combines the signals from the paths 21, 22 and provides the combined signal to reader circuitry 29.

The reader 20 has a first variable amplifier 28_1 in the first linear polarization path 21 and a different second variable amplifier 28_2 in the second linear polarization path 22.

The first variable amplifier 28_1 in the first linear polarization path 21 controls an accepted CoPol component of reception polarization and the second variable amplifiers 28_2 in the second linear polarization path 22 controls an accepted Cross-Pol component of reception polarization. By changing the relative amplification of the first variable amplifier 28_1 and the second variable amplifier 28_2, the reader 20 controls an orientation of a direction of the reception polarization.

The angle θ between the reception polarization and the direction of CoPol polarization can be adjusted by adjusting the relative amplification provided by the amplifiers 28_1, 28_2. If the first amplifier 28_1 provides a variable amplification A_1 and the second amplifier 28_2 provides a variable amplification A_2, then tan θ = A_2/A_1.

In the example described thus far, the range of θ is between 0 and π/2.

The circuit illustrated in FIG 6 is configured to enable a greater range of θ between 0 and +/- π/2.

The CoPol feed 24 of the antenna 23 is connected to the first amplifier 28_1 in the first path 21.

The second path 22 comprises a switch 26 that couples only one of the CrossPol feeds 24 of the antenna 23 to the combiner 27. Either one of the CrossPol feeds 24 of the antenna 23 are connected, via switch 26, to the second amplifier 28_2 in the second path 22.

A π radian phase delay can thus be introduced between the first path 21 and the second path 22 by changing the state of the switch 26. Changing the state of the switch 26 changes a polarity of the signal in the second path 22.

Thus, in one state of switch 26, θ is between 0 and +π/2 and in the other state θ is between 0 and -π/2.

In the examples illustrated in FIGs 5 & 6, the reader 20 is configured to switch between rejecting first linear polarized signals and accepting second linear polarized signals, orthogonal to the first linear polarized signals, to rejecting second linear polarized signals and accepting first linear polarized signals.

FIG 7 illustrates an example of a reader 20 that is configured to electronically adjust 72 a reception polarization to receive a radio frequency signal 32 having a second polarization P2, different to a first polarization P1, more efficiently than a radio frequency signal 12 having the first polarization P1 transmitted by an activator 10. In the examples illustrated in FIGs 5 & 6, the reception polarization is linear polarized. In the example illustrated in FIG 7, the reception polarization is circular polarized.

In the example of FIG 7, the reader 20 is configured to switch between rejecting left-hand circular polarized signals and accepting right-hand circular polarized signals to rejecting right-hand circular polarized signals and accepting left-hand circular polarized signals. The reader 20 comprises means for switching between rejecting/accepting left-hand circular polarized signals and right-hand circular polarized signals.

The reader 20 comprises a dual-polarized antenna 23. The signal from the CoPol feed of the antenna 23 travels along a first path 21 to a combiner 27. The signal from the CrossPol feed of the antenna 23 travels along a second path 22 to the combiner 27. The combiner 27 combines the signals from the paths 21, 22 and provides the combined signal to t reader circuitry 29.

The first path 21 comprises a first variable phase element 26_1, that introduces a variable phase delay to the signal in the first path 21.

The second path 22 comprises a second variable phase element 26_2, that introduces a variable phase delay to the signal in the second path 22.

By selectively applying either a π/2 phase delay or a π/2 phase advance (3π/2 phase delay) between the two paths 21, 22 the reader 20 switches between a state of rejecting left-hand circular polarized signals and accepting right-hand circular polarized signals and a state of accepting left-hand circular polarized signals and rejecting right-hand circular polarized signals.

For example, a π/2 phase delay of CrossPol polarization relative to CoPol polarization (delay of the second path 22 relative to the first path 21) can be achieved by applying a delay of π/2 at the second variable phase element 26_2 in the second path 22 and applying zero delay at the first variable phase element 26_1 in the first path 21.

For example, a π/2 phase delay of CoPol polarization relative to CrossPol polarization (delay of the first path 21 relative to the second path 22) can be achieved by apply a delay of π/2 at the first variable phase element 26_1 in the first path 21 and applying zero delay at the second variable phase element 26_2 in the second path 22.

The first path 21 comprises a first variable amplifier 28_1_that introduces a variable gain to the signal in the first path 21._The second path 22 comprises a second variable amplifier 28_2 that introduces a variable gain to the signal in the second path 22. This can be used to compensate for eccentricity in the circular polarization.

Referring to FIGs 5 to 7, the reader 20 is configured to provide selective amplification, via variable amplifiers 28, of multiple linear polarization paths 21, 22 followed by combination 27 of the multiple linear polarization paths 21, 22. The reader 20 has a variable amplifier 28_1 in the first linear polarization path 21 and a different variable amplifier 28_2 in the second linear polarization path 22.

The reader 20 is also configured to provide selective phase adjustment of the multiple linear polarization paths 21, 22 before combination of the multiple linear polarization paths 21, 22. The reader 20 has phase control circuitry 26 that is configured to provide a selective relative phase adjustment between the first polarization path 21 and the second polarization path 22.

In the examples illustrated in FIG 5 and 6, the reader 20 is configured to provide selective amplification and selective polarity adjustment of multiple linear polarization paths 21, 22 followed by combination of the multiple linear polarization paths.

In the example illustrated in FIG 7, the reader 20 is configured to provide selective amplification 28 and selective phase adjustment 26 of multiple linear polarization paths 21, 22 followed by combination of the multiple linear polarization paths 21, 22.

Circular polarization can be created by combining two orthogonal linear polarizations of equal strength, where one of the linear polarizations are shifted in phase by π/2 radians relative to the other linear polarization. Elliptical polarization is created by combining two orthogonal linear polarizations of non-equal strength, where one of the linear polarizations are shifted in phase by π/2 radians relative to the other linear polarization.

The independent amplification 28 of the first path 21 (Co-Pol) and of the second path 22 (Cross-Pol) enable the reader 20 to configure reception polarization by controlling eccentricity of elliptical reception polarization. An antenna designed for circular polarization will only exhibit such characteristics at a limited angular area around the boresight direction (perpendicular to the surface of the patch). Other angular directions will experience a power imbalance between the two orthogonal polarizations, due to the geometric misalignment of the surface of the patch. As such, this power imbalance will result in elliptical polarization. This eccentricity in circular polarization can be compensated for using the independent amplification 28 of the first path 21 (Co-Pol) and of the second path 22 (Cross-Pol).

The selective phase adjustment 26 is configured to enable handedness of reception polarization to be controlled. For example, by switching the first path 21 from lagging the second path 22 by π/2 radians to leading the second path by π/2 radians.

Therefore in at least some examples, for example as illustrated in FIGs 5 to 7, the reader 20 is arranged to configure reception polarization. Configuration of the reception polarization comprises controlling gain and/or polarity of orthogonal components of a received signal. There is separate variable amplification 28 in the paths 21, 22. Configuration of reception polarization can additionally comprise controlling phase of orthogonal components of a received signal.

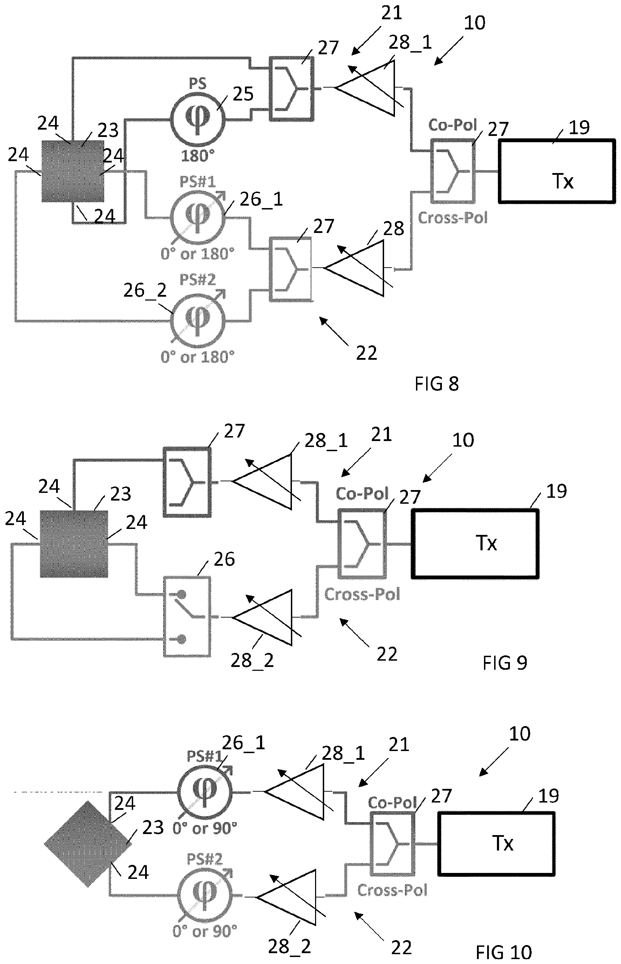

FIGs 8, 9, 10 illustrate examples of an activator 10 configured to electronically adjust a transmission polarization to transmit a radio frequency signal 32 having a first polarization P1, different to a reception polarization of a reader 20.

FIG 8 illustrates an activator 10 that uses a circuit similar to that described for reader 20 in FIG 5. The activator 10 is configured to electronically adjust a transmission polarization to transmit a radio frequency signal 32 having a first linear polarization P1, different to a reception linear polarization of a reader 20. The circuits are the same except that reception circuitry is replaced by transmission circuitry 19 and the polarities of the variable amplifiers 28_1, 28_2 are reversed. As a consequence, the first path 21 and the second path 22 operate as transmission paths and the combiners 27 operate as splitters. The control of polarization using controlled adjustment of the variable amplifiers 28_1, 28_2 is as described above for the reader 20, however, instead of adjusting reception polarization the adjustment controls transmission polarization. The optional control of polarization using controlled adjustment of the pair of variable phase elements 26_1, 26_2 is as described above the reader 20, however, instead of adjusting reception polarization the adjustment controls transmission polarization.

FIG 9 illustrates an activator 10 that uses a circuit similar to that described for reader 20 in FIG 6. The activator 10 is configured to electronically adjust a transmission polarization to transmit a radio frequency signal 32 having a first linear polarization P1, different to a reception linear polarization of a reader 20. The circuits are the same except that reception circuitry is replaced by transmission circuitry 19 and the polarities of the variable amplifiers 28_1, 28_2 are reversed. As a consequence, the first path 21 and the second path 22 operate as transmission paths and the combiners 27 operate as splitters. The control of polarization using controlled adjustment of the variable amplifiers 28_1, 28_2 is as described above the reader 20, however, instead of adjusting reception polarization the adjustment controls transmission polarization. The optional control of polarization using switch 26 is as described above for the reader 20, however, instead of adjusting reception polarization the adjustment controls transmission polarization.

FIG 10 illustrates an activator 10 that uses a circuit similar to that described for reader 20 in FIG 6. The activator 10 is configured to electronically adjust a transmission polarization to transmit a radio frequency signal 32 having a first circular polarization P1, orthogonal to a reception circular polarization of a reader 20. The circuits are the same except that reception circuitry is replaced by transmission circuitry 19 and the polarities of the variable amplifiers 28_1, 28_2 are reversed. As a consequence, the first path 21 and the second path 22 operate as transmission paths and the combiner 27 operates as a splitter. The control of polarization using controlled adjustment of the variable amplifiers 28_1, 28_2 is as described above for the reader 20, however, instead of adjusting reception polarization, the adjustment controls transmission polarization. The optional control of polarization using the different states of the phase adjusters 26_1, 26_2 is as described above for the reader 20, however, instead of adjusting reception polarization the adjustment controls transmission polarization.

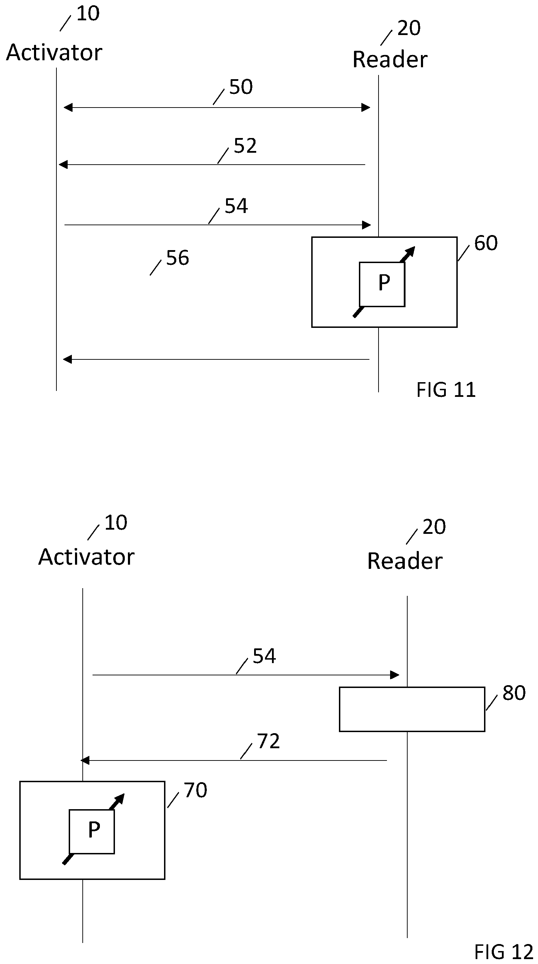

FIG 11 illustrates an example of a process that results in a reader 20 electronically adjusting 60 a reception polarization to receive a radio frequency signal having a second polarization, different to a first polarization, more efficiently than a radio frequency signal having the first polarization transmitted by an activator 10.

Optionally, the activator 10 and the reader 20 exchange configuration messages 50.

The reader 20 sends a request 52 to the activator 10 for reception polarization calibration.

The activator 10 transmits and the reader 20 receives a calibration signal 54. The calibration signal can either inform the reader of the transmission polarization or the calibration signal 54 can be transmitted from the activator 10 with a first polarization P1 used for activating a passive radio frequency device 30.

The reader 20 adjusts 60 its reception polarization to receive a radio frequency signal having a second polarization P2 more efficiently than a radio frequency signal having the first polarization P1 transmitted by the activator 10.

Optionally, the reader 20 sends an acknowledgement to the activator 10 acknowledging that calibration is complete.

The reader 20 can thus be configured to dynamically control the variable amplification 28 and/or phase 26 in the paths 21, 22.

In some examples, the reader 20 is configured to dynamically control the variable amplification 28 and/or phase 26 in the paths 21, 22 based on measurements at the reader, for example measuring the transmission polarization of the activator and adjusting the reception polarization accordingly.

As described above, in at least some examples, the reader 20 is configured to provide separate variable amplification 28 and/or phase control 26 in the paths 21, 22 to increase rejection of a transmitted radio frequency signal having the first polarization P1 and increase acceptance of a transmitted radio frequency signal having the second polarization P2. For example, the reception polarization can be made orthogonal to the transmission polarization.

FIG 12 illustrates an example of a process that results in an activator 10 electronically adjusting 70 a transmission polarization to transmit a radio frequency signal 12 having a first polarization, different to a reception polarization of a reader 20. It can, for example, be configured to electronically adjust a transmission polarization to transmit a radio frequency signal 32 having a first polarization P1, orthogonal to a reception polarization of a reader 20.

In at least some examples, the electronic adjustment 70 of the transmission polarization to transmit a radio frequency signal 12 having a first polarization, different (e.g. orthogonal) to a reception polarization of a reader 20 is dependent upon information 72 received from the reader 20. The information 72 can, for example, inform the activator 10 of a reception polarization used by the reader 20.

In some but not necessarily all examples, the activator 10 transmits and the reader 20 receives a calibration signal 54 transmitted from the activator 10 with a first polarization P1 used for activating a passive radio frequency device 30. The reader measures the transmission polarization of the activator. The reader 20 obtains a comparison between the measured transmission polarization and the reception polarization and provides this comparison to the activator as information 72. This enables the activator to adjust its transmission polarization so that the transmission polarization is sufficiently different (e.g. orthogonal) to the reception polarization.

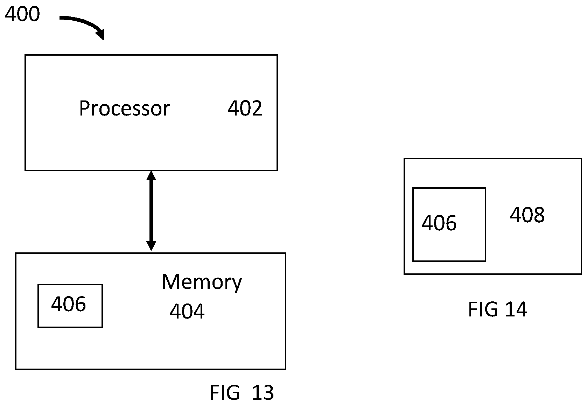

Fig 13 illustrates an example of a controller 400 suitable for use in an apparatus such as an activator 10 and/or a reader 20. Implementation of a controller 400 may be as controller circuitry. The controller 400 may be implemented in hardware alone, have certain aspects in software including firmware alone or can be a combination of hardware and software (including firmware).

As illustrated in Fig 13 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10, 20 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The reader 20 comprises:
at least one processor 402; and
   at least one memory 404 including computer program code,
   the at least one memory storing instructions that, when executed by the at least one processor 402, cause the apparatus at least to:
adjust a reception polarization to receive a radio frequency signal having a second polarization, different to a first polarization, more efficiently than a radio frequency signal having a first polarization transmitted by an activator 10.

The activator 10 comprises:
at least one processor 402; and
   at least one memory 404 including computer program code,
   the at least one memory storing instructions that, when executed by the at least one processor 402, cause the apparatus at least to:
adjust a transmission polarization to transmit a radio frequency signal having a first polarization, different to a reception polarization of a reader 20.

As illustrated in Fig 14, the computer program 406 may arrive at the apparatus 10, 20 via any suitable delivery mechanism 408. The delivery mechanism 408 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10, 20 may propagate or transmit the computer program 406 as a computer data signal.

Computer program instructions for causing a reader 20 to perform at least the following or for performing at least the following: adjust a reception polarization to receive a radio frequency signal having a second polarization, different to a first polarization, more efficiently than a radio frequency signal having a first polarization transmitted by an activator 10.

Computer program instructions for causing an activator 10to perform at least the following or for performing at least the following: adjust a transmission polarization to transmit a radio frequency signal having a first polarization, different to a reception polarization of a reader 20.

The computer program instructions may be comprised in a computer program, a non-transitory computer readable medium, a computer program product, a machine-readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A passive radio frequency device reader configured to electronically adjust a reception polarization to receive a radio frequency signal having a second polarization, different to a first polarization, more efficiently than a radio frequency signal having a first polarization transmitted by an activator.

2. A passive radio frequency device reader as claimed in claim 1, configured to:
accept radio frequency signals having a polarization aligned with the reception polarization, and reject radio frequency signals having a polarization orthogonal to the reception polarization, and comprising a controller configured to control the reception polarization to be substantially orthogonal to the first polarization.

3. A passive radio frequency device reader as claimed in claim 1 or 2, comprising means for performing one of more of the following processes:
configure reception polarization by controlling gain of orthogonal components of a received signal;
configure reception polarization by controlling gain and phase of orthogonal components of a received signal;
configure reception polarization by controlling eccentricity of elliptical reception polarization;
configure reception polarization by controlling handedness of reception polarization.

4. A passive radio frequency device reader as claimed in claim 1, 2 or 3, configured to selectively combine multiple linear polarization paths.

5. A passive radio frequency device reader as claimed in claim 4, configured to provide one or more of:
selective amplification of multiple linear polarization paths followed by combination of the multiple linear polarization paths;
selective amplification and selective phase adjustment of multiple linear polarization paths followed by combination of the multiple linear polarization paths;
selective amplification and selective polarity adjustment of multiple linear polarization paths followed by combination of the multiple linear polarization paths.

6. A passive radio frequency device reader as claimed in claim 5, wherein selective polarity adjustment is controlled using a switch or switchable baluns.

7. A passive radio frequency device reader as claimed in claim 4, configured to select one or more of a plurality of antenna feeds to selectively combine multiple linear polarization paths.

8. A passive radio frequency device reader as claimed in any preceding claim, comprising:
a first linear polarization path;
a second linear polarization path;
separate variable amplification in the first linear polarization path and the second linear polarization path.

9. A passive radio frequency device reader as claimed in claim 8, configured to dynamically control the variable amplification in the first linear polarization path and the second linear polarization path and/or configured to dynamically control the variable amplification in the first linear polarization path and the second linear polarization path based on measurements at the reader.

10. A passive radio frequency device reader as claimed in claim 8 or 9, configured to provide separate variable amplification in the first linear polarization path and the second linear polarization path to increase rejection of a transmitted radio frequency signal having the first polarization and increase acceptance of a transmitted radio frequency signal having the second polarization.

11. A passive radio frequency device reader as claimed in any preceding claim configured to:
send a request to a passive radio frequency device activator for reception polarization calibration;
receive a calibration signal transmitted from the passive radio frequency device activator with a first polarization;
adjust the reception polarization to receive a radio frequency signal having a second polarization more efficiently than a radio frequency signal having the first polarization transmitted by the activator.

12. A system comprising:
a passive radio frequency device reader as claimed in any preceding claim;
an activator configured to transmit a radio frequency signal having a first polarization;
at least a passive radio frequency device,
wherein the reader is configured to adjust the reception polarization of the reader to reject radio frequency signals from the activator and accept radio frequency signals from the passive radio frequency device.

13. A system as claimed in claim 12, wherein the activator is comprised in a first node of a cellular telecommunications network, and wherein the reader is comprised in a second node of the cellular telecommunications network that is distinct from the first node of the cellular telecommunications network.

14. A passive radio frequency device activator configured to electronically adjust a transmission polarization to transmit a radio frequency signal having a first polarization, different to a reception polarization of a passive radio frequency device reader.

15. A passive radio frequency device activator as claimed in claim 14, configured to electronically adjust a transmission polarization to transmit a radio frequency signal having a first polarization P1, orthogonal to a reception polarization of a passive radio frequency device reader, and optionally configured to electronically adjust the transmission polarization in dependence upon information received from the passive radio frequency device reader.
